# EUROPEAN PATENT APPLICATION

(11) **EP 1 099 595 A2**
(43) Date of publication of application: **16.05.2001**
(21) Application number: 00309695.5
(22) Date of filing: 02.11.2000
(51) Int. Cl.: B60N 2/36

(54) **Folding seat**

(30) Priority: 09.11.1999 GB 9926378
(71) Applicant: CMAK Limited, Coventry CV6 5NL (GB)
(72) Inventor: Higgins, John, Nr Rugby, Warwickshire CV23 9LY (GB)
(74) Representative: Maddison, Victoria Jayne

(57) **Abstract**

A seat for a passenger vehicle comprises a backrest portion (3, 4) and a seat rest portion (2) linked by a pivotal joint (5) and each pivotally connected at their other extremity to a mounting plate (7a, 7b), the arrangement being such that the angular relationship between the backrest and the seat portion may be inverted from a seating position to a luggage storage position whereby providing a luggage storage area bounded in part by the underside of the seat and backrest portions.

## Description

This invention relates to seats for use in passenger vehicles.

It is common in many passenger vehicles such as: taxis, trains, aeroplanes, buses and coaches to provide seated accommodation for the passengers. Often, the passengers may wish to carry with them quantities of luggage, for example working papers for a meeting, overnight bags if an overnight stay is involved, or large suitcases if the stay is for a number of days or weeks. Thus, it is often also necessary that space be provided on a passenger vehicle for the storage of luggage. A particular consideration is that the luggage can be stored in a manner which does not inconvenience other users of the vehicle, for example by blocking gangways, and that it be stored safely so that there is minimal chance of damage or injury should the vehicle suddenly turn, brake or accelerate, or be involved in an accident.

Various arrangements for the storage of luggage are well known and include overhead racks or closable containers arranged above seated accommodation, storage areas between seats in a back-to-back arrangement, and separate luggage containers in the form of a cage or dedicated carriage on a train. In smaller vehicles luggage may be stored separately from the passengers in a boot or hold located to the rear or undersurface of the vehicle.

Overhead storage racks suffer from a number of disadvantages. Firstly, in particularly busy trains or buses luggage is often precariously piled up on these racks and can present a risk of injury in the event of a sudden turn or brake by the vehicle. The racks are also at approximately head height for many of the passengers and may also present a risk of injury to the passenger's head should he stumble during sudden movement or stopping of the vehicle. Whilst closed overhead containers provide for more secure storage of luggage, their size and shape are often impractical for the storage of large or unusually shaped luggage. Also, as they are again generally located at head height they present a possible risk of injury to passengers.

The provision of a separate compartment for the storage of luggage during the trip, for example the boot of a car or the guard's van in a train or the hold in aeroplane, provides the passengers with a more comfortable and safer seating area; however, the passengers are required to part with their luggage. Associated disadvantages with this arrangement are that passengers may not wish to part with valuables contained in their luggage and the necessary delay in the journey whilst all luggage is collected and stored and unloaded at the various ports of call along the route.

Often, when other luggage storing facilities are not available or are inconvenient to the passenger, the passenger will stack luggage on a free passenger seat. The latter is undesirable as the luggage is not secured and could, in the occurrence of a sudden movement or braking of the vehicle result in injury due to luggage falling from the seat.

Thus, it is an object of the present invention to provide some means for the convenient and safe storage of passenger luggage during transport in a passenger vehicle.

In accordance with the present invention there is provided a seat for a passenger vehicle comprising:
a seat portion in hinged communication with a backrest portion, the seat portion being pivotally connected to a first mounting at a point distal to the hinged communication with the backrest, and
the back rest portion being pivotally connected to a second mounting at a point distal to the hinged communication with the seat portion, each mounting being fixable to the vehicle body, the arrangement being such that the angular arrangement between the backrest and seat portions may be inverted from a seating position to a luggage storage position whereby providing a luggage storage area bounded in part by the underside of the seat portion and the underside of the backrest portion.

Optionally, the backrest portion may comprise a headrest which is pivotally linked between the second mounting and the upper end of the remainder of the backrest. Preferably, the seat will incorporate a locking mechanism for locking the seat into the sitting position or the luggage storage position as appropriate. Conveniently, the locking mechanism may be associated with the headrest, for example, by incorporation into the pivotal link between the headrest and the remainder of the backrest.

It will be appreciated that the luggage storage area provided by inversion of the seat is bounded by the floor of the vehicle and the underside of each of the backrest and seat portions. The area may be further bounded by the rear of an adjacent back facing seat or an internal wall of the vehicle. Where two seats according to the present invention are arranged back-to-back, it will be appreciated that a larger size storage area can be provided for oversized luggage.

As well as providing the facility for storage of luggage within the area bounded by the undersurface of the seat, the seat may be adapted to provide a tray portion on the upper outer surface of the luggage storage area for the relatively secure storage of smaller lightweight items of luggage. This tray arrangement may be provided by a protruding edge, the end of the backrest portion adjoining the seat portion, the protrusion lying flush with the surface of the seat portion when the seat is in the seating position and protruding in an upright direction from the surface of the upper side of the luggage storage area when the seat is in that position. Where a headrest is also present, the headrest may provide a second protruding edge opposing the aforementioned protrusion to prevent carried items from sliding off the surface in two directions.

Conveniently, the first mounting is fixed to the floor of the vehicle providing a leg for the seat and an extension of the side of the luggage containment area and is seated in the luggage storage position. The second mounting may be fixed to the side of the vehicle or may optionally be fixed to another seat arranged back-to-back with the said seat or alternatively may be connected to the floor of the vehicle.

For the purposes of exemplification, one embodiment of the invention will now be described with reference to the Figures in which:
Figure 1 shows a seat according to the present invention arranged in the seating position;
Figure 2 shows the seat of Figure 1 arranged in the luggage storage position;
Figures 3a to 3f show the mechanism by which the seat is converted from the seating position to the luggage storage position.

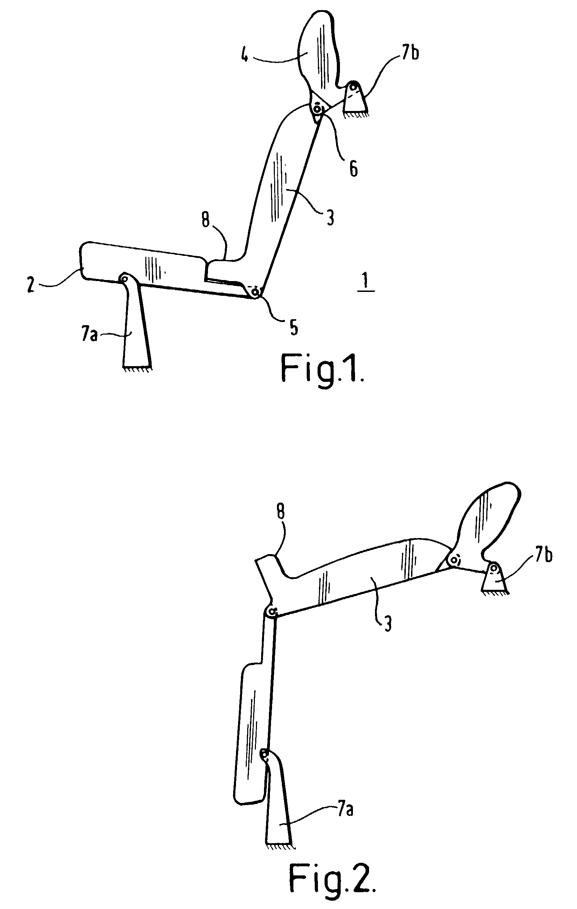

In Figure 1 it can be seen that one embodiment of the invention comprises a seat (1) having a seat portion (2) and a backrest portion (3), an extension of the backrest portion forming a headrest (4). The seat portion (2) is connected to the backrest portion (3, 4) by a hinge (5). The headrest (4) is linked to the remainder of the backrest portion (3) by pivotal link (6) at positions distal from the hinged communication (5), the backrest (3, 4) and the seat portion (2) are each pivotally mounted to mountings (7a, 7b). The backrest portion (3, 4) has a protruding edge (8) which, when the seat is in the seating position, is substantially flush with the upper surface of the seat portion (2).

As can be understood from the Figures, the seat mechanism consists of three links defined by the seat portion (2), the backrest lower portion (3), and the headrest portion (4). The ends of the links adjacent to each other are each pin-jointed together to allow rotary freedom of relative motion between the links. The seat portion (2) and the right-hand extremity of the headrest are pin-jointed to their respective mountings which are attached rigidly to the vehicle structure.

The deployment of the seat into its luggage storage mode is initiated by first releasing a safety catch (not shown) which is attached to the headrest and which prevents deployment of the seat until it is released. In the particular embodiment shown, once the safety catch is released, the seat movement is carried out by either manually pulling the top of the headrest to the right (of the figure) and/or manually pushing the back of the seat to the left and upwards. The deployment of the seat can also be assisted by the inclusion of a counter-balance weight mounted under the front edge of the seat portion (2). Additionally or alternatively a gas spring mounted in such a way as to provide lowering effort before the mid-deployment position and lifting effort after the mid-deployment position may be incorporated. The inclusion of either the counter-balance weight and/or the gas spring allows the seat to be either deployed or returned by a single movement of the headrest to the left. In either case, once the motion of the seat mechanism is under way the inertia of the seat mechanism will carry the seat past its mid-deployment position to the conclusion of its motion.

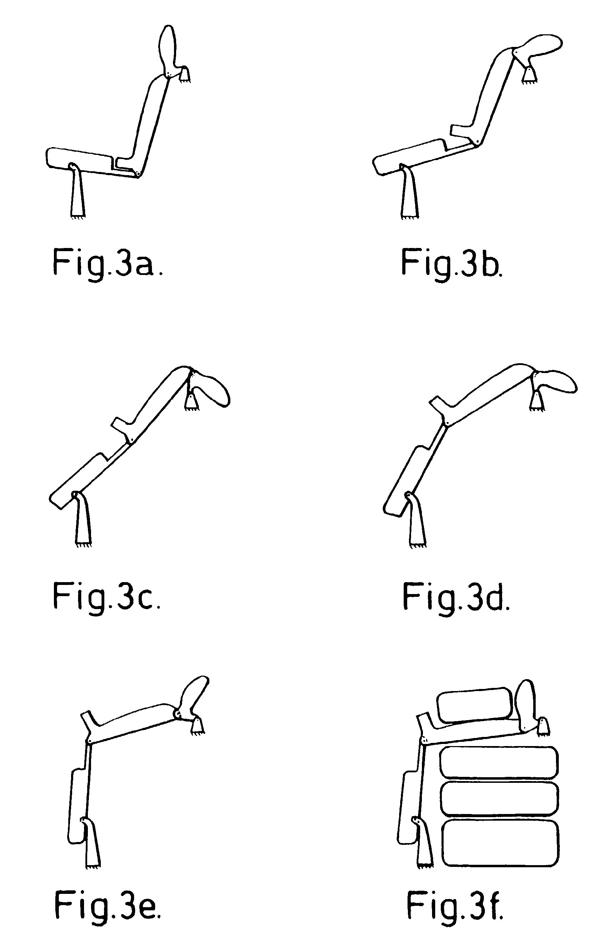

At the extremity of its deployment motion, the seat portion reaches a physical stop limited by the first mounting (7a) and the length of the backrest portion (3, 4) which prevents further anti-clockwise movement. At this point the backrest and headrest are in the positions shown in Figure 2. Applying an anti-clockwise moment of force to the headrest of the embodiment shown in Figure 2 elastically deforms the seat portion and allows the backrest (3, 4) to move into the position shown in Figure 3f whereby the headrest reaches a physical stop preventing further anti-clockwise movement. In this position the seat portion (2), by virtue of being elastically deformed applies a force to the lower backrest portion (3) which in turn forces the headrest (4) against its physical stop thereby locking the seat mechanism in this luggage storage position. The safety catch incorporated into the headrest link is also activated in this position providing additional security.

Once the seat is deployed it can be seen that luggage may be stored in the area below the seat with the seat forming a physical barrier above and to one side of the luggage.

Once the seat is deployed into its luggage storage mode, the headrest (4), by virtue of its attachment to the backrest portion (3), remains in its original upright position. This feature and the inclusion of the protrusion (8) as in integral part of the backrest forms a shelf with a vertical barrier at each end. Small lightweight luggage items may be safely stored upon this shelf between the vertical barriers created by the headrest (4) at one end and the protrusion (8) at the other. Assuming that the orientation of the seat is either facing forwards or rearwards within the vehicle, then these barriers will inhibit the forward or rearward movement of any luggage items under heavy braking or acceleration of the vehicle. Furthermore, the design of the seat allows for the attachment of a seat belt to be mounted upon the seat in such a way that the seat belt moves with the seat when it is deployed into its luggage storage mode. In this way, the seat belt may be used to retain the luggage situated on top of the seat.

It is to be understood that the foregoing represents just one embodiment of the present invention and is not intended to detract from the true scope of the invention as defined in the appended claims.

## Claims

1. A seat (1) for a passenger vehicle comprising:
a seat portion (2) in hinged communication with a backrest portion (3),
the seat portion (2) being pivotally connected to a first mounting (7a) at a point distal to the hinged communication with the backrest portion (3) and the backrest portion being pivotally connected to a second mounting (7b) at a point distal to the hinged communication with the seat portion (2), each mounting (7a, 7b) being fixable to the vehicle body, the arrangement being such that the angular arrangement between the backrest (3) and seat (2) portions may be inverted from a seating position to a luggage storage position thereby providing a luggage storage area bounded in part by the underside of the seat portion (2) and the backrest portion (3).

2. A seat for a passenger vehicle as claimed in claim 1 wherein the backrest portion (3) comprises a headrest (4) which is pivotally linked between the second mounting (7b) and the lower part of the backrest.

3. A seat for a passenger vehicle as claimed in any preceding claim further comprising means (4) for locking the seat into either the seat position or the luggage storage position or both.

4. A seat for a passenger vehicle as claimed in claim 3 wherein the locking mechanism is associated with a headrest portion (4) of the backrest portion (3).

5. A seat for a passenger vehicle as claimed in any preceding claim wherein the backrest portion (3) comprises a protrusion (8) extending in the direction of the seat portion when in the seating position and extending substantially upright in the luggage storage position so as to hold luggage in position during transit.

6. A seat for a passenger vehicle as claimed in any one of claims 2 to 5 wherein when the seat (2,3,4) is deployed into its luggage storage position, the headrest (4) forms an upright protrusion to hold luggage in position during transit.

7. A seat for a passenger vehicle as claimed in any preceding claims wherein the first mounting (7a) is connected to the floor of the vehicle.
